# EUROPÄISCHE PATENTANMELDUNG

(11) **EP 2 848 357 A1**
(43) Veröffentlichungstag der Anmeldung: **18.03.2015**
(21) Anmeldenummer: 13184333.6
(22) Anmeldetag: 13.09.2013
(51) Int. Cl.: B23Q 1/00, F16M 11/12

(54) **Vorrichtung zum Halten des Bedienpults einer Werkzeugmaschine**

(71) Anmelder: DMG MORI SEIKI AKTIENGESELLSCHAFT, 33689 Bielefeld (DE); DMG MORI SEIKI CO., LTD., Yamatokoriyama-shi, Nara 639-1160 (JP)
(72) Erfinder: Seitz, Reinhold, 87659 Hopferau (DE); Strebelow, Alexander, 88142 Wasserburg (DE)
(74) Vertreter: MERH-IP Matias Erny Reichl Hoffmann

(57) **Zusammenfassung**

Die vorliegende Erfindung betrifft eine Vorrichtung zum Einsatz an einer Werkzeugmaschine, umfassend ein Bedienpult 3, über das die Werkzeugmaschine 2 durch einen Benutzer steuerbar ist, und einen das Bedienpult 3 haltenden Haltearm 4, der mittels eines Gelenks 44 derart an der Werkzeugmaschine 2 befestigbar ist, dass der das Bedienpult 3 haltende Haltearm 4 relativ zu der Werkzeugmaschine 2 um eine vertikale Achse A1 des Gelenks 44 verschwenkbar ist, wobei die Vorrichtung 1 mit wenigstens einem Dämpfungselement 51 und/oder 52 versehen ist, das einen Stoß der Vorrichtung 1 dämpft, der aufgrund einer Kollision zwischen der Vorrichtung 1 und der Werkzeugmaschine 2 auftritt, wenn der Haltearm 4 um die vertikale Achse A1 zu der Werkzeugmaschine 2 hin verschwenkt wird.

## Beschreibung

Die Erfindung betrifft eine Vorrichtung zum Einsatz mit einer Werkzeugmaschine, und eine mit einer solchen Vorrichtung ausgerüsteten Werkzeugmaschine.

Um eine Werkzeugmaschine, insbesondere ein numerisch gesteuerte Werkzeugmaschine, durch einen Benutzer zu bedienen bzw. zu steuern, kann ein Bedienpult bzw. eine Bedien- und oder Steuereinrichtung eingesetzt werden, die vom Bediener leicht zugänglich außerhalb der Werkzeugmaschine vorgesehen ist, jedoch mit der Werkzeugmaschine über einen Haltearm in Verbindung steht.

Das Bedienpult bzw. die Bedien- und/oder Steuervorrichtung weist typischerweise eine Anzeigeeinheit (z.B. einen Monitor) zum Anzeigen von Werkzeugmaschinen-Steuerinformation, und eine Eingabeeinheit (z.B. Tastatur, Maus, Trackball, Bedienknöpfe, etc.) zum Eingeben von Werkzeugmaschinen-Steuer- bzw. Bedieninformation auf. Üblicherweise kann das Bedienpult gegenüber der Werkzeugmaschine bewegt werden, beispielsweise durch Verschwenken des Haltearms gegenüber der Werkzeugmaschine.

Die der Erfindung zugrundeliegende Aufgabe ist, ein eine Vorrichtung zu schaffen, die es einem Bediener ermöglicht, eine Werkzeugmaschine flexibel bedienen zu können und ein Beschädigen des Bedienpults und des Werkzeugmaschinengehäuses im Betrieb der Werkzeugmaschine weitgehend zu vermeiden.

Zur Lösung dieser Aufgabe stellt die Erfindung eine Vorrichtung gemäß Anspruch 1 bereit. Vorteilhafte Ausführungsformen und Weiterbildungen des Erfindungsgedankens finden sich in den Unteransprüchen.

Gemäß einer Ausführungsform der Erfindung wird eine Vorrichtung bereitgestellt, die ein Bedienpult zum Steuern einer Werkzeugmaschine sowie einen Haltearm, über den die Bedienpult mit der Werkzeugmaschine verbunden sein kann, aufweist. Die Vorrichtung ist mit wenigstens einem Dämpfungselement versehen, das dazu geeignet ist, Erschütterungen der Vorrichtung zu dämpfen, die entstehen, wenn aufgrund einer Relativbewegung zwischen der Vorrichtung und der Werkzeugmaschine die Vorrichtung gegen die Werkzeugmaschine (oder einen externen Gegenstand stößt).

Ist beispielsweise die Vorrichtung so ausgestaltet, dass der Haltearm gegenüber der Werkzeugmaschine verfahren und/oder verschwenkt und/oder verdreht werden kann, so können erfindungsgemäß bei Anbringen von einem oder mehreren Dämpfungselementen an geeigneten Stellen des Bedienpults und/oder des Haltearms viele Arten von Stößen gedämpft werden, die durch derartige Bewegungen des Haltearms relativ zur Werkzeugmaschine entstehen können.

Insbesondere können beispielsweise Stöße abgemildert werden, die entstehen, wenn das Bedienpult bei zu weitem Verschwenken gegen die Werkzeugmaschine bzw. das Werkzeugmaschinengehäuse (z.B. die äußere Werkzeugmaschinen-Kabinenwand) oder gegen andere externe Gegenstände stößt, die sich auf dem Pfad befinden, entlang dessen das Bedienpult bei Verschwenken geführt wird. Weiterhin können Stöße abgemildert werden, die entstehen, wenn der Haltearm in die Werkzeugmaschine eingezogen wird oder eine Tür oder Klappe der Werkzeugmaschine, die sich gegenüber des Bedienpults befindet, zu weit in Richtung des Bedienpults geöffnet wird.

Gemäß einem ersten Aspekt wird im Sinne der Erfindung eine Vorrichtung zum Einsatz an einer Werkzeugmaschine vorgeschlagen, die ein Bedienpult, über das die Werkzeugmaschine durch einen Benutzer steuerbar ist, und einen das Bedienpult haltenden bzw. tragenden Haltearm umfasst. Der Haltearm ist mittels eines Gelenks derart an der Werkzeugmaschine befestigbar, dass der das Bedienpult haltende bzw. tragende Haltearm relativ zu der Werkzeugmaschine um eine vertikale Achse des Gelenks verschwenkbar ist. Vertikal bedeutet hierbei im Wesentlichen vertikal in Bezug auf einen Werkstattboden, auf dem die Werkzeugmaschine aufstellbar ist.

Die Vorrichtung ist erfindungsgemäß mit wenigstens einem Dämpfungselement versehen, insbesondere einem einstückigen Dämpfungselement, das einen Stoß der Vorrichtung dämpft, der aufgrund einer Kollision zwischen der Vorrichtung und der Werkzeugmaschine auftritt, wenn der Haltearm um die vertikale Achse zu der Werkzeugmaschine hin verschwenkt wird.

Gemäß einem zweiten Aspekt wird im Sinne der Erfindung wird außerdem eine numerisch gesteuerte Werkzeugmaschine voreschlagen, umfassend eine Vorrichtung gemäß dem vorstehend beschriebenen ersten Aspekt und zudem ein Gelenk, wobei der Haltearm das Bedienpult hält bzw. trägt und mittels des Gelenks derart an der Werkzeugmaschine befestigt ist, dass der das Bedienpult haltende Haltearm relativ zu der Werkzeugmaschine um die vertikale Achse des Gelenks verschwenkbar ist, und die Vorrichtung mit wenigstens einem Dämpfungselement versehen ist, das einen Stoß der Vorrichtung dämpft, der aufgrund einer Kollision zwischen der Vorrichtung und der Werkzeugmaschine auftritt, wenn der Haltearm um die vertikale Achse zu der Werkzeugmaschine hin verschwenkt wird.

Gemäß einer bevorzugten Ausführungsform der Erfindung weist das Bedienpult ein von dem Haltearm gehaltenes Gelenkelement (bzw. Achselement) auf, an dem eine Anzeigeeinheit und eine Eingabeeinheit des Bedienpults gehalten sind. Bevorzugt erstreckt sich das Gelenkelement entlang einer horizontalen Achse und die Anzeigeeinheit und/oder die Eingabeeinheit sind vorzugsweise um die horizontale Achse verschwenkbar.

Bevorzugt ragt das zumindest eine Dämpfungselement von dem Bedienpult weg in Richtung der horizontalen Achse über die Anzeigeeinheit und/oder die Eingabeeinheit hinaus, und bildet somit einen exponierten Punkt in Richtung der horizontalen Achse, so dass das Dämpfungselement Stöße dämpft und auf dieser Seite des Bedienpults eine Kollision zwischen externen Gegenständen und insbesondere der Werkzeugmaschinenkabinenwand mit dem Bedienpult, insbesondere mit der Anzeigeeinheit und/oder der Eingabeeinheit, verhindert. Besonders vorteilhaft können zudem Erschütterungen reduziert werden, so dass auch elektronische Bauteile im Inneren des Bedienpults vor erschütterungsbedingten Beschädigungen geschützt sind.

Vorzugsweise ist ein erster Endabschnitt des Gelenkelements an einem Verbindungselement angebracht, das an einem Ende des Haltearms vorgesehenen ist, wobei ein erstes Dämpfungselement an dem Verbindungselement angebracht ist, wobei sich die horizontalen Achse vorzugsweise durch das erste Dämpfungselement erstreckt und das erste Dämpfungselement vorzugsweise von dem Bedienpult weg in Richtung der horizontalen Achse über das Verbindungselement hinausragt. Das erste Dämpfungselement bildet somit einen exponierten Punkt in Richtung der horizontalen Achse, so dass das erste Dämpfungselement Stöße dämpft und auf dieser Seite des Bedienpults eine Kollision zwischen externen Gegenständen und insbesondere der Werkzeugmaschinenkabinenwand mit dem Bedienpult, insbesondere mit der Anzeigeeinheit und/oder der Eingabeeinheit, verhindert. Besonders vorteilhaft können zudem Erschütterungen reduziert werden, so dass auch elektronische Bauteile im Inneren des Bedienpults vor erschütterungsbedingten Beschädigungen geschützt sind.

Gemäß einer weiteren bevorzugten Ausführungsform ist ein zweites Dämpfungselement an einem dem ersten Endabschnitt gegenüberliegenden zweiten Endabschnitt des Gelenkelements angeordnet, wobei das zweite Dämpfungselement von dem Bedienpult weg in Richtung der horizontalen Achse über die Anzeigeeinheit und/oder die Eingabeeinheit hinausragt. Das zweite Dämpfungselement bildet somit einen exponierten Punkt in Richtung der horizontalen Achse auf einer in Achsrichtung gegenüberliegenden Seite des Bedienpults, so dass das zweite Dämpfungselement Stöße dämpft und auf dieser anderen Seite des Bedienpults eine Kollision zwischen externen Gegenständen und insbesondere der Werkzeugmaschinenkabinenwand mit dem Bedienpult, insbesondere mit der Anzeigeeinheit und/oder der Eingabeeinheit, verhindert. Besonders vorteilhaft können zudem Erschütterungen reduziert werden, so dass auch elektronische Bauteile im Inneren des Bedienpults vor erschütterungsbedingten Beschädigungen geschützt sind.

Gemäß einer weiteren bevorzugten Ausführungsform weist der Haltearm eine L-Form auf, wobei ein horizontaler Armabschnitt des Haltearms mittels des Gelenks an der Werkzeugmaschine anbringbar ist, und das Verbindungselement an einem sich aufwärts erstreckenden Armabschnitt des Haltearms angebracht ist, wobei das Verbindungselement um eine zweite vertikale Achse (d.h. insbesondre parallel zur Achse des Gelenks der Werkzeugmaschine) relativ zu dem sich aufwärts erstreckenden Armabschnitt verschwenkbar ist.

Dies ermöglicht eine besonders optimale Bedienbarkeit der Werkzeugmaschine, da der Bediener einerseits durch Verschwenken des Haltearms das Bedienpult an einen Platz verschwenken kann, an dem er einen Bearbeitungsraum der Werkzeugmaschine aus einer von ihm gewünschten Position zur Überwachung der Bearbeitung einsehen kann, während er das Bedienpult bedient, und andererseits an diesem Platz die Orientierung des Bedienpults an seine Blickrichtung zum Arbeitsraum anpassen kann, durch Verschwenken des Bedienpults relativ zu dem Haltearm.

Gemäß einer bevorzugten Ausführungsform der Erfindung umfasst das zumindest eine Dämpfungselement ein Kunststoffmaterial, insbesondere bevorzugt ein elastisches Kunststoffmaterial, das dazu geeignet ist, Stöße aufgrund einer elastischen Verformung abzudämpfen.

Vorzugsweise ist das zumindest eine Dämpfungselement lösbar an der Vorrichtung angebracht. Dies hat den Vorteil, dass es auf einfache Weise möglich ist, das Dämpfungselement bzw. die Dämpfungselemente durch einfaches Bedienpersonal bei Beschädigung vor Ort in einer Maschinenhalle auszutauschen, ohne dass der Betrieb der Maschine beeinträchtigt wird. Bei Beschädigungen des Bedienpults selbst (z.B. der Anzeige- oder Eingabeeinheit) oder auch bei Beschädigungen einer Kabinenwand der Werkzeugmaschine, die ohne Dämpfungselemente auftreten können, oder auch bei erschütterungsbedingten Beschädigungen elektronischer Bauteile einer numerischen Steuereinrichtung im inneren des Bedienpults, müsste die Maschine durch geschultes Personal repariert werden, wobei mit Standzeiten der Maschine zu rechnen ist, und bei denen ggf. das Bedienpult komplett ausgetauscht werden müsste.

Gemäß einer bevorzugten Ausführungsform der Erfindung weist das Bedienpult bzw. die Bedien- und/oder Steuervorrichtung beispielsweise eine Anzeigeeinheit zum Anzeigen von Werkzeugmaschinen-Steuerinformation und eine Eingabeeinheit zum Eingeben von Werkzeugmaschinen-Steuerinformation auf, wobei die Anzeigeeinheit vorzugsweise gegenüber der Eingabeeinheit um eine horizontale Achse verschwenkbar ist. Horizontal bedeutet hierbei im Wesentlichen horizontal in Bezug auf einen Werkstattboden, auf dem die Werkzeugmaschine aufstellbar ist.

Ein erstes Ende eines Achselements der Achse kann in Achsrichtung über die Anzeigeeinheit und/oder über die Eingabeeinheit hinaus ragen, wobei dann bevorzugt ein erstes Dämpfungselement an dem ersten Ende des Achselements angeordnet ist. Dadurch, dass das erste Ende des Achselements in Achsrichtung über die Anzeigeeinheit und/oder über die Eingabeeinheit hinausragt, ist es sehr wahrscheinlich, dass das Bedienpult an diesem exponierten Punkt gegen die Werkzeugmaschine oder einen externen Gegenstand stößt, weshalb das Anbringen eines Dämpfungselements an dieser Position besonders vorteilhaft ist.

Das Dämpfungselement kann abnehmbar auf ein Gewinde, das an dem ersten Ende des Achselements angeordnet sein, aufgeschraubt sein oder abnehmbar auf einen Aufnahmeabschnitt der Vorrichtung aufsteckbar sein. Damit können je nach Bedarf unterschiedliche Dämpfungselemente eingesetzt werden. Beispielsweise können stark dämpfende Dämpfungselemente eingesetzt werden, wenn starke Stöße zu erwarten sind.

Des Weiteren ist es vorteilhaft möglich die Dämpfungselemente durch einfaches Bedienpersonal bei Beschädigung vor Ort in einer Maschinenhalle auszutauschen, ohne dass der Betrieb der Maschine beeinträchtigt wird. Bei Beschädigungen des Bedienpults selbst (z.B. der Anzeige- oder Eingabeeinheit) oder auch bei Beschädigungen einer Kabinenwand der Werkzeugmaschine, die ohne Dämpfungselemente auftreten können, müsste die Maschine durch geschultes Personal repariert werden, wobei mit Standzeiten der Maschine zu rechnen ist, und bei denen ggf. das Bedienpult ausgetauscht werden müsste.

Der Haltearm kann mit einem zweiten Ende des Achselements verbunden sein, derart, dass sich ein an das zweite Ende des Achselements angrenzender erster Abschnitt des Haltearms zumindest im Wesentlichen in Achsrichtung von dem Bedienpult wegerstreckt. In diesem Fall kann vorteilhafterweise ein zweites Dämpfungselement an einem von dem Bedienpult abgewandten Ende des ersten Abschnitts des Haltearms vorgesehen sein, bevorzugt auf Achshöhe der horizontalen Achse, bevorzugt derart, dass sich die gedachte Achse in Verlängerung durch das wenigstens eine Dämpfungselement hindurch verläuft.

Vorzugsweise verläuft der Haltearm, ausgehend von einem dem Achselement abgewandten Ende des ersten Abschnitts, in einem zweiten Abschnitt nach unten, um anschließend in einem dritten Abschnitt zur Werkzeugmaschine hin zu verlaufen (insbesondere bevorzugt in einer L-Form), und weist eine Ausrichtung des zweiten Abschnitts des Haltearms in Richtung des dritten Abschnitts eine horizontale, zur Werkzeugmaschine hin gerichtete erste Komponente, und eine vertikale, zum Boden hin gerichtete zweite Komponente auf, wobei die erste Komponente kleiner ist als die zweite Komponente, so ist das von dem Achselement abgewandte Ende des ersten Abschnitts ebenfalls ein exponierter Punkt, an dem häufig Stöße auftreten. In diesem Fall ist bildet das von dem Achselement abgewandte Ende des ersten Abschnitts den am weitesten entfernten Punkt des Haltearms von der Werkzeugmaschine. Folglich ist es besonders zweckmäßig, hier ein Dämpfungselement vorzusehen.

Das wenigstens eine Dämpfungselement kann beispielsweise aus einem beliebigen elastischen Material bestehen, z.B. einem elastischen Kunststoff oder einem elastischen Schaumstoff. Alternativ kann auch beispielsweise eine Federvorrichtung mit einem Federelement vorgesehen werden.

Die Erfindung wird im Folgenden unter Bezugnahme auf die Figuren in beispielsweiser Ausführungsform näher erläutert.

Es zeigen:
Fig. 1A eine Vorrichtung gemäß einer Ausführungsform der Erfindung in Frontansicht mit Werkzeugmaschine,
Fig. 1B die Vorrichtung gemäß Fig. 1 in Perspektivansicht mit Werkzeugmaschine,
Fig. 1C ein Detail der Vorrichtung gemäß Fig. 1 in Perspektivansicht mit Werkzeugmaschine,
Fig. 2A eine Vorrichtung gemäß einer Ausführungsform der Erfindung in einer vorderen Perspektivansicht,
Fig. 2B die Vorrichtung gemäß Fig. 2A in einer ersten hinteren Perspektivansicht,
Fig. 2C die Vorrichtung gemäß Fig. 2A in einer Frontansicht,
Fig. 2D die Vorrichtung gemäß Fig. 2A in einer zweiten hinteren Perspektivansicht,
Fig. 3 die Vorrichtung gemäß Fig. 2A in einer Perspektivansicht gemäß der Blickrichtung der Fig. 2D als Explosionsdarstellung, und
Fig. 4 eine Seitenansicht der Vorrichtung gemäß Fig. 2A.

In der Erfindung sind, soweit sinnvoll, identische beziehungsweise einander entsprechende Bereiche, Bauteile oder Bauteilgruppen mit denselben Bezugsziffern gekennzeichnet.

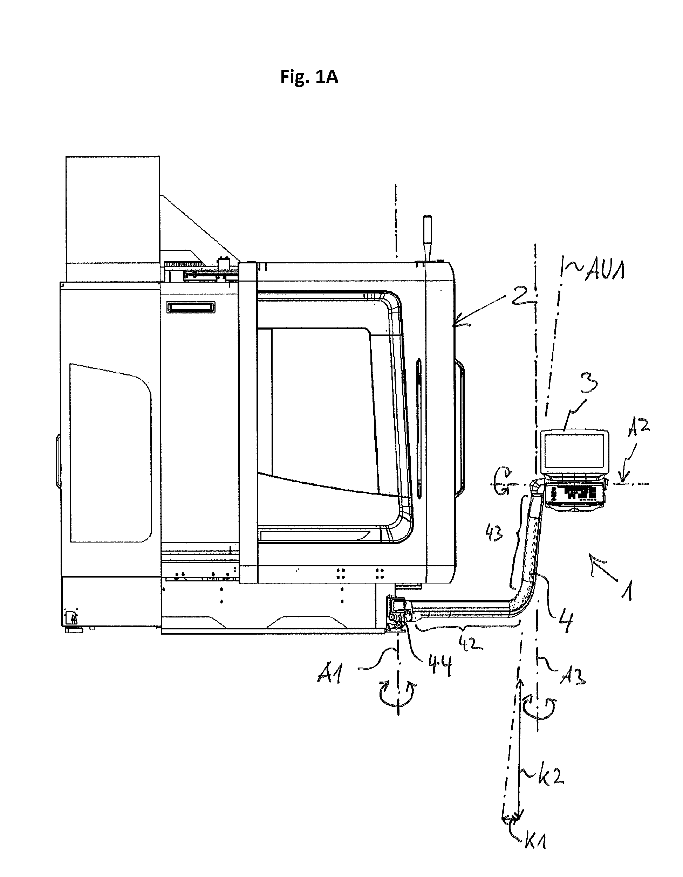

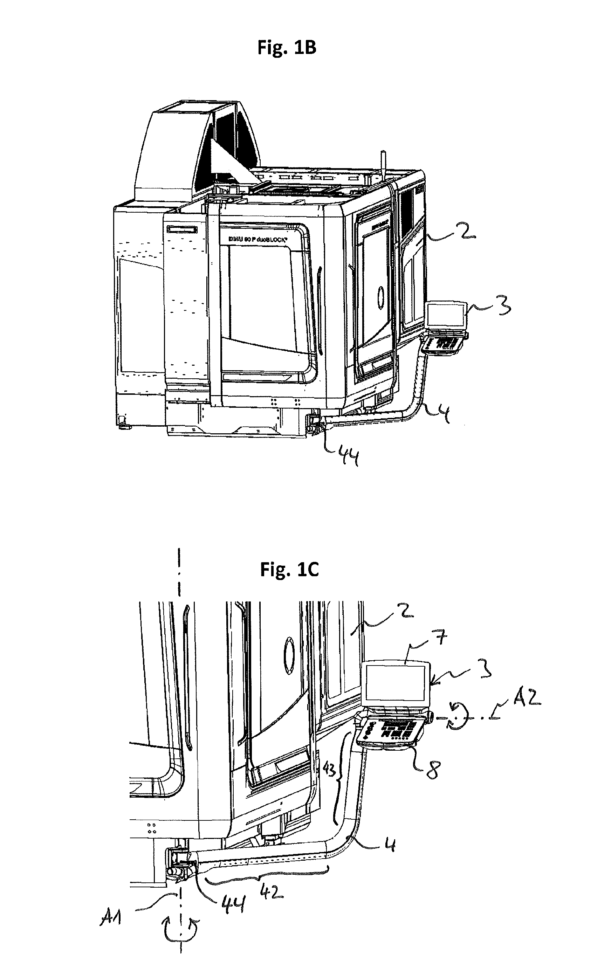

Figs. 1A bis 1C zeigen eine Vorrichtung 1 gemäß einer Ausführungsform der Erfindung. Insbesondere zeigen Fig. 1A eine Vorrichtung gemäß einer Ausführungsform der Erfindung in Frontansicht mit Werkzeugmaschine, Fig. 1B die Vorrichtung gemäß Fig. 1 in Perspektivansicht mit Werkzeugmaschine und Fig. 1C ein Detail der Vorrichtung gemäß Fig. 1 in Perspektivansicht mit Werkzeugmaschine. Die Vorrichtung 1 weist ein Bedienpult 3 zum Bedienen/Steuern einer Werkzeugmaschine 2 sowie einen Haltearm 4 auf, über den das Bedienpult 3 mit der Werkzeugmaschine 2 verbunden ist, insbesondere mittels eines Gelenks 44 verschwenkbar an der Werkzeugmaschine angebracht ist.

Insbesondere ist in dieser Ausführung der Haltearm 44 beispielhaft schwenkbar an dem Gelenk 44 angebracht und ist durch Verschwenken um eine zum Werkstattboden vertikal ausgerichtete erste Vertikalachse A1 rotierbar, wobei das Bedienpult 3 durch Verschwenken des Arms 4 ebenfalls um die erste Vertikalachse A1 verschwenkbar ist. Hierbei ist die Vertikalachse A1 derart ausgerichtet, dass sie bei Aufstellung der Werkzeugmaschine auf einem ebenen Werkstattboden im Wesentlichen senkrecht zum Werkstattboden ausgerichtet ist.

Weiterhin ist das Bedienpult 3 beispielhaft um einen zweiten Freiheitsgrad verschwenkbar am Haltearm 4 angebracht. Hierbei kann das Bedienpult 3 relativ zu dem Haltearm 4 um eine zweite Vertikalachse A3 rotiert werden. Hierbei ist die zweite Vertikalachse A3 ebenfalls derart ausgerichtet, dass sie bei Aufstellung der Werkzeugmaschine auf einem ebenen Werkstattboden im Wesentlichen senkrecht zum Werkstattboden ausgerichtet ist, so dass die beiden Vertikalachsen A1 und A3 parallel zueinander ausgerichtet sind.

Weiterhin ist das Bedienpult 3 beispielhaft um einen dritten Freiheitsgrad verschwenkbar am Haltearm 4 angebracht. Hierbei kann das Bedienpult 3 als gesamte Einheit oder auch nur Teile des Bedienpults 4 relativ zu dem Haltearm 4 um eine Horizontalachse A2 rotiert werden. Hierbei ist die Horizontalachse A2 derart ausgerichtet, dass sie bei Aufstellung der Werkzeugmaschine auf einem ebenen Werkstattboden im Wesentlichen parallel zum Werkstattboden ausgerichtet ist, so dass die Horizontalachse A2 zu den beiden Vertikalachsen im Wesentlichen senkrecht ausgerichtet ist.

Die vorstehende Anordnung und die Verschwenkbarkeiten und Achsen sind derart ausgebildet, dass jegliches Verschwenken des Bedienpults 3 um eine oder mehrere der Achsen A1, A2 und A3 den Abstand des Bedienpults 3 zum Boden im Wesentlichen konstant hält (wobei Teile des Bedienpults durch Rotation um die Horizontalachse einen Abstand zum Werkstattboden ändern können).

Weiterhin ist der Haltearm 43 im Wesentlichen L-Förmig ausgebildet und weist einen sich horizontal erstreckenden Abschnitt 42 auf, der an dem Gelenk 44 angebracht ist, und weist einen aufwärts gerichteten Abschnitt 43 auf, der sich in Richtung einer Achse AU1 erstreckt. Die Achse AU1 ist hierbei beispielhaft in einem spitzen Winkel geneigt zu der Vertikalachse A3 ausgerichtet, derart, dass der aufwärts gerichtete Abschnitt 43 sich zu dem Bedienpult 3 hin erstreckend von der Werkzeugmaschine entfernt, und ein unteres Ende des Abschnitts 43 einen geringeren Abstand zur Werkzeugmaschine 2 aufweist, als ein oberes Ende des Abschnitts 43. Dies hat den Vorteil, dass der Bediener unterhalb des Bedienpults auf einer dem Arm 4 zugewandten Seite mehr Steh- oder Sitzplatz zur Verfügung hat.

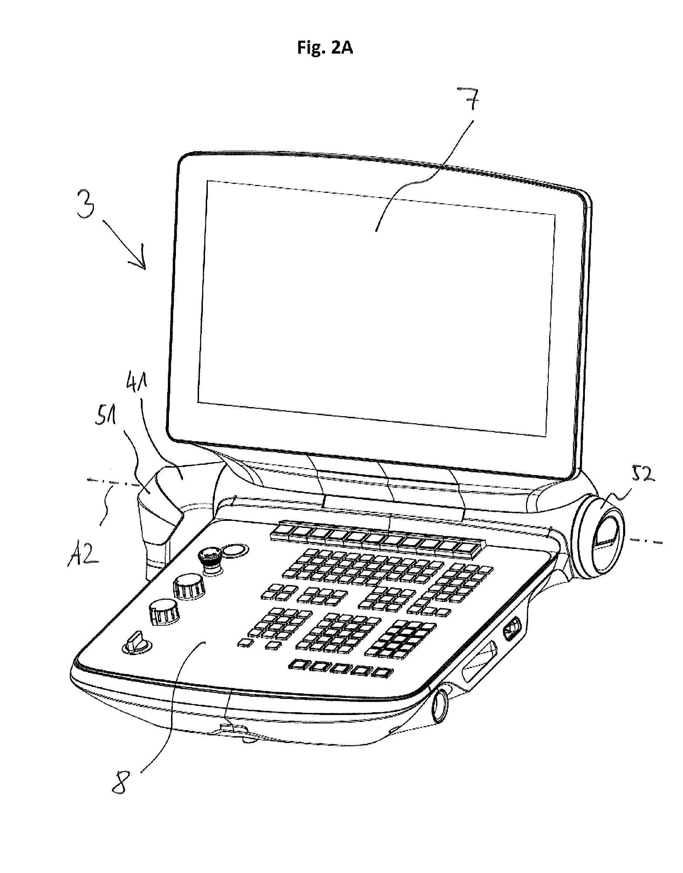

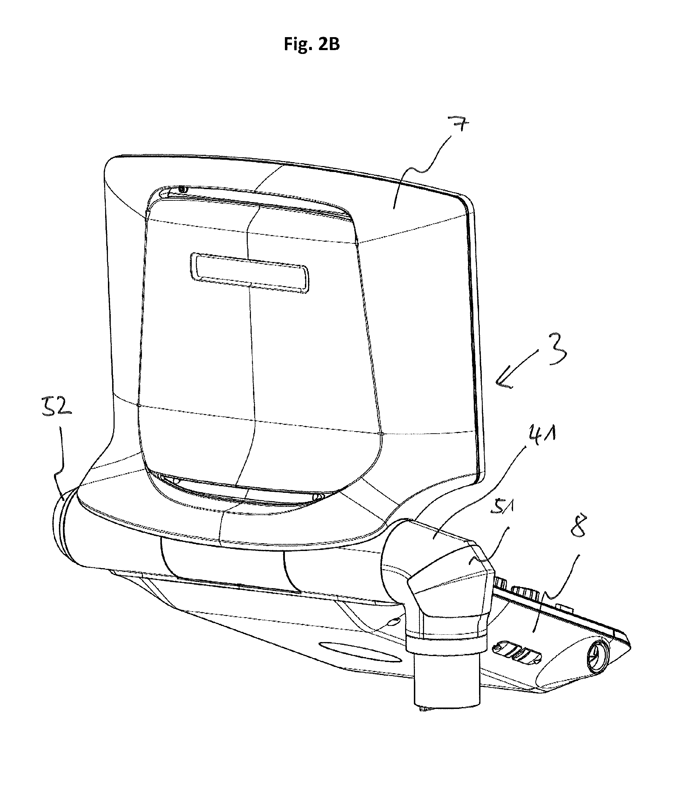

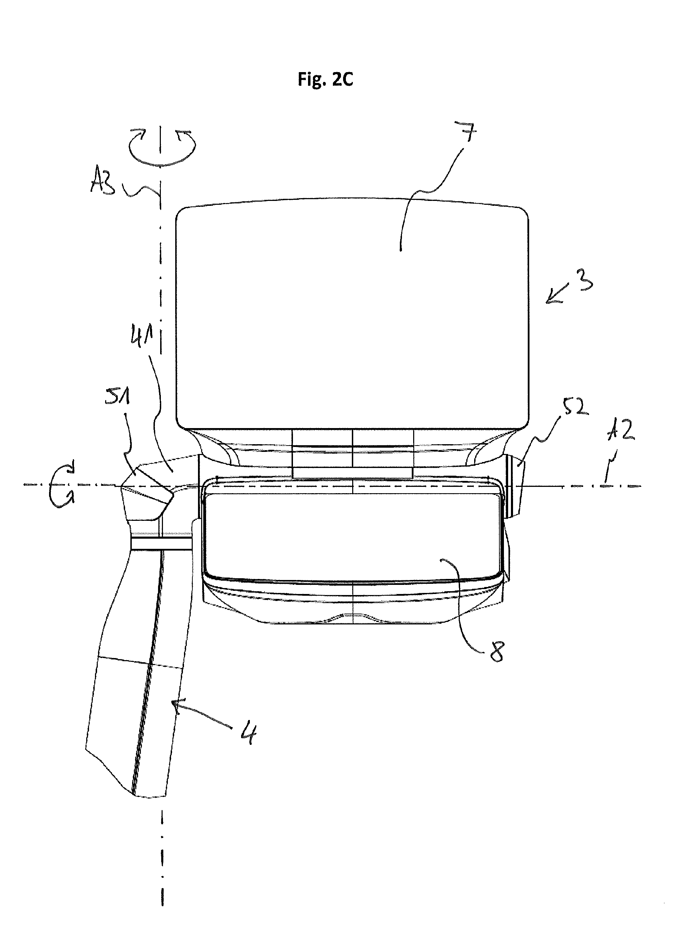

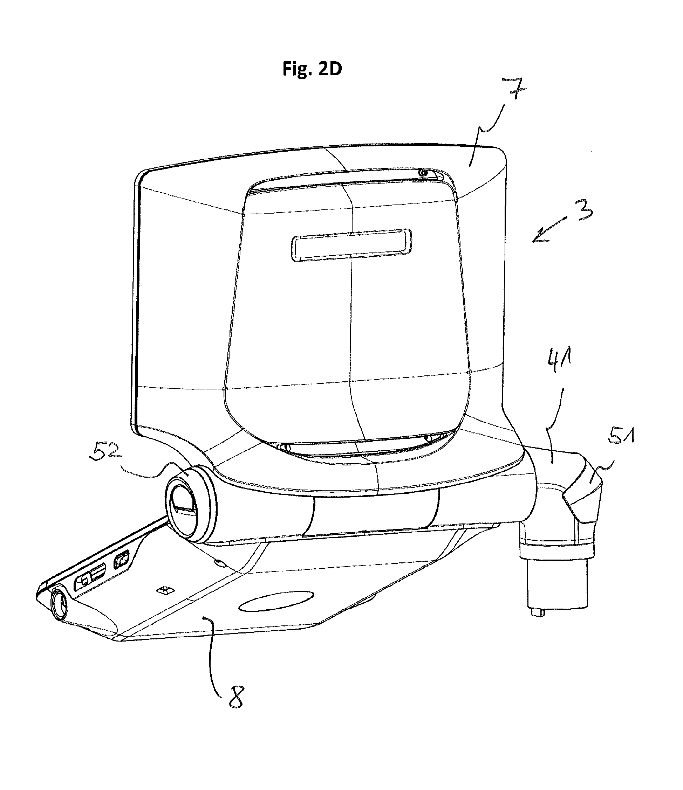

Fig. 2A zeigt eine Vorrichtung gemäß einer Ausführungsform der Erfindung in einer vorderen Perspektivansicht, Fig. 2B zeigt die Vorrichtung gemäß Fig. 2A in einer ersten hinteren Perspektivansicht, Fig. 2C zeigt die Vorrichtung gemäß Fig. 2A in einer Frontansicht, und Fig. 2D zeigt die Vorrichtung gemäß Fig. 2A in einer zweiten hinteren Perspektivansicht.

Die Vorrichtung 1 gemäß der beispielhaften Ausgestaltung nach Figs. 2A bis 2D ist auf gegenüber liegenden Seiten des Bedienpults 3 mit Dämpfungselementen 51 und 52 versehen, welche Erschütterungen der Vorrichtung 1 (insbesondere des Bedienpults 3) dämpfen, die entstehen, wenn aufgrund einer Relativbewegung zwischen der Vorrichtung 1 und der Werkzeugmaschine 2 die Vorrichtung 1 gegen die Werkzeugmaschine 2 oder gegen deren Gehäuse oder einen externen Gegenstand stößt.

Wie insbesondere in Fig. 2A zu sehen ist, weist das Bedienpult 3 eine Anzeigeeinheit 7 zum Anzeigen von Werkzeugmaschinen-Steuerinformation und eine Eingabeeinheit 8 zum Eingeben von Werkzeugmaschinen-Steuerinformation auf.

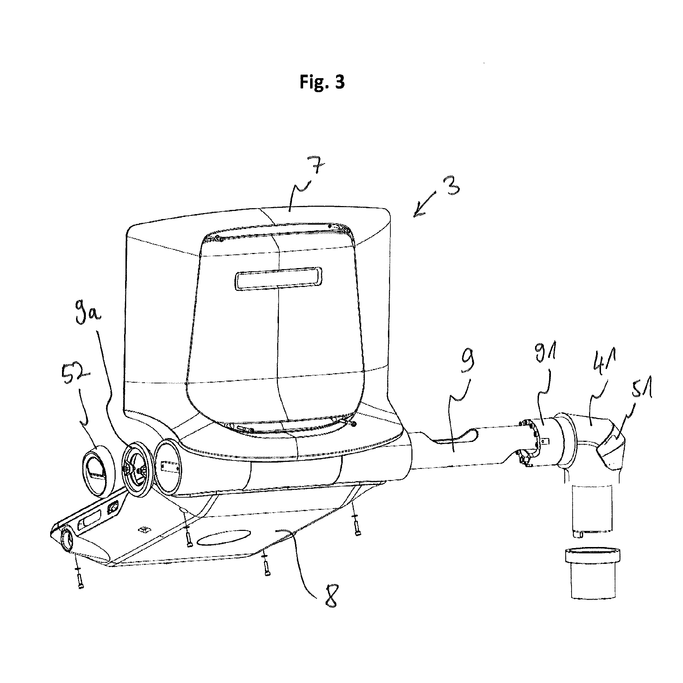

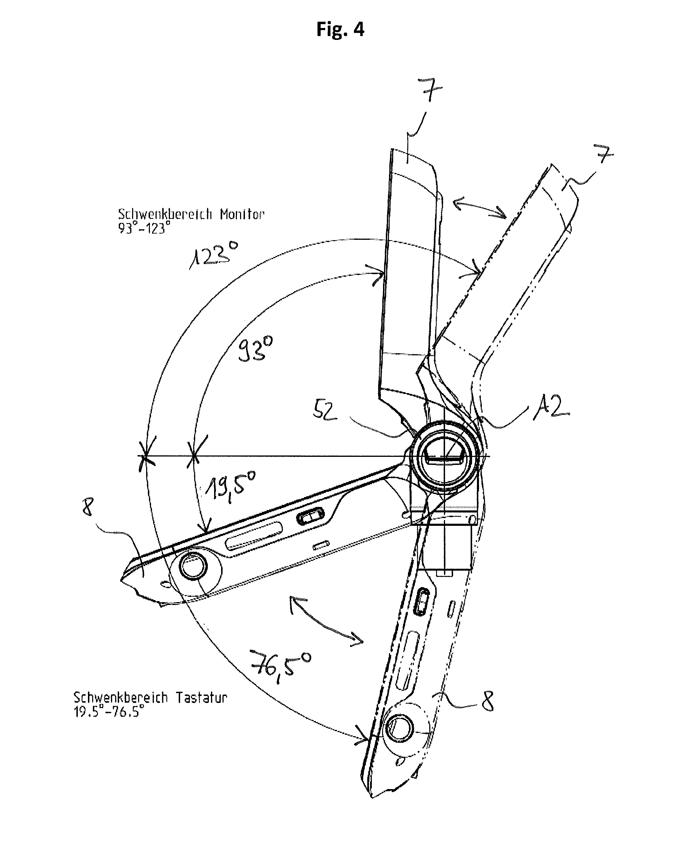

Die Anzeigeeinheit 7 ist in bevorzugten Ausgestaltungen relativ zu der Eingabeeinheit 8 um einen Achskörper 9 (im Folgenden als "Gelenkelement" bezeichnet) verschwenkbar (siehe auch Fig. 3). Somit sind sowohl die Anzeigeeinheit 7 als auch die Eingabeeinheit 8 unabhängig voneinander um die Horizontalachse A2 rotierbar (siehe auch Fig. 4). Die Horizontalachse verläuft beispielhaft durch die beidseitig angeordneten Dämpfungselemente 51 und 52.

Die Dämpfungselemente 51 und 52 können abnehmbar angebracht sein, beispielsweise auf einen Aufnahmeabschnitt aufgesteckt sein oder auf ein Gewinde (nicht gezeigt) aufgeschraubt sein. Damit können je nach Bedarf unterschiedlich ausgestaltete erste Dämpfungselemente 51 und 52 verschiedener Größen und Materialien eingesetzt werden. Beispielsweise können stark dämpfende Dämpfungselemente eingesetzt werden, wenn starke Stöße zu erwarten sind.

Der Haltearm 4 ist über ein Verbindungselement 41 mit einem Ende 91 des Gelenkelement 9 verbunden, derart, dass sich ein an das Ende des Gelenkelements 9 angrenzender Endabschnitt des Haltearms 4 (zumindest ein Abschnitt des Verbindungsstücks 41) im wesentlichen in Achsrichtung A2 von dem Bedienpult wegerstreckt. In diesem Fall ist vorteilhafterweise das Dämpfungselement 51 an einem von dem Gelenkelement 9 abgewandten Ende des Verbindungsstücks 41 des Haltearms 4 vorgesehen.

Die Ausrichtung AU1 des Armabschnitts 43 des Haltearms 4 weist eine horizontale, zur Werkzeugmaschine hin gerichtete erste Komponente K1, und eine vertikale, zum Boden hin gerichtete zweite Komponente K2 auf, wobei die erste Komponente K1 kleiner ist als die zweite Komponente K2.

Mit anderen Worten: Die Ausrichtung AU1 des Abschnitts 43 ist geneigt gegenüber der Vertikalen, derart, dass das obere Ende des Abschnitts 43 weiter von der Werkzeugmaschine 1 entfernt ist als das untere Ende des Abschnitts 43. Damit ist das von dem Gelenkelement 9 abgewandte Ende des Verbindungselements des Haltearms 4 ein exponierter Punkt, an dem häufig Stöße auftreten. Folglich ist hier ein zweites Dämpfungselement 52 vorgesehen.

Fig. 3 zeigt die Vorrichtung gemäß Fig. 2A in einer Perspektivansicht gemäß der Blickrichtung der Fig. 2D als Explosionsdarstellung.

Hierbei ist das Gelenkelement 9 erkennbar, dass sich von einem ersten Ende zu einem zweiten Ende des Bedienpults 3 entlang der Horizontalachse A2 erstreckt, und an dem die Anzeigeeinheit 7 und die Eingabeeinheit 8 jeweils rotierbar um die Horizontalachse A2 angeordnet bzw. gelagert sind. An einem Ende des Bedienpults 3 ist das Dämpfungselement 52 über ein ringförmiges Befestigungselement 9a befestigt, wobei das Dämpfungselement 52 bevorzugt auf das Befestigungselement 9a aufsteckbar und/oder in das Befestigungselement 9a einrastbar an der Vorrichtung 1 befestigt werden kann, insbesondere bevorzugt lösbar befestigt.

Auf der dem Dämpfungselement 52 in Achsrichtung gegenüberliegenden Seite des Bedienpults 3 ist ein Endabschnitt 91 des Gelenkelements 9 an dem Verbindungsstück 41 des Haltearms 4 befestigt. Auf der dem Bedienpult in Achsrichtung A2 abgewandten Seite des Verbindungsstücks 41 ist das Dämpfungselement 51 an dem Verbindungsstück 41 des Haltearms 4 angebracht. Das Dämpfungselement 51 ist bevorzugt auf das Verbindungsstück 41 des Haltearms 4 aufsteckbar und/oder in Verbindungsstück 41 des Haltearms 4 einrastbar, so dass es insbesondere bevorzugt lösbar an dem Verbindungsstück 41 befestigt werden kann.

Das Verbindungsstück 41 des Haltearms 4 ist gemäß den vorstehenden Erläuterungen derart an dem Haltearm 4 angebracht, dass das Bedienpult 3 relativ zu dem Haltearm 4 um die Vertikalachse A3 (d.h. senkrecht zur Horizontalachse A2) verschwenkt werden kann. Insbesondere ist das Verbindungsstück 41 des Haltearms 4 rotierbar an dem Haltearm 4 lagernd angebracht, derart, dass das Verbindungsstück 41 relativ zu dem Abschnitten 42 und 43 des Haltearms 4 um die Vertikalachse A3 rotierbar ist und mit Rotation des Verbindungsstück 41 relativ zu dem Abschnitten 42 und 43 des Haltearms 4 das Bedienpult 3 relativ zu dem Haltearm 4 um die Vertikalachse A3 verschwenkt wird. Dies hat den Vorteil, dass die Anordnung und Orientierung des Dämpfungselements 51 und des Bedienpults 3 zueinander bei Verschwenken des Bedienpults 3 um die Vertikalachse A3 unverändert bleiben, und so das Bedienpult 3 auf der Seite des Verbindungsstücks 41 und des Haltearms 4 unabhängig von der Schwenkrichtung um die Vertikalachse A3 durch das Dämpfungselement 51 geschützt bleibt.

Fig. 4 zeigt eine Seitenansicht der Vorrichtung gemäß Fig. 2A. Hierbei ist die unabhängige Verschwenkbarkeit der Anzeigeeinheit 7 und der Eingabeeinheit 8 um die senkrecht zur Darstellungsebene liegende Horizontalachse A2 illustriert. Beispielhaft beträgt ein Schwenkbereich der Anzeigeeinheit 7 von 93° bis 123° oberhalb und in Bezug zur Horizontalebene und der Schwenkbereich der Eingabeeinheit 8 von 19,5° bis 76° unterhalb und in Bezug zur Horizontalebene.

Weitere Dämpfungselemente können an anderen geeigneten Stellen des Haltearms 4 und des Bedienpults 3 vorgesehen werden. Erfindungsgemäß werden somit durch Anbringen von Dämpfungselementen an geeigneten Stellen des Bedienpults 3 und/oder des Haltearms 4 vielerlei Arten von Stößen gedämpft. So können beispielsweise Stöße abgemildert werden, die entstehen, wenn das Bedienpult 3 bei zu weitem Verschwenken entlang eines Bogens gegen die Werkzeugmaschine 2 oder gegen externe Gegenstände stößt, die sich auf dem Pfad befinden, entlang dessen das Bedienpult 3 bei Verschwenken des Haltearms 4 geführt wird. Weiterhin können Stöße abgemildert werden, die entstehen, wenn der Haltearm 4 in die Werkzeugmaschine 2 eingezogen wird oder eine Tür 6 der Werkzeugmaschine 1, die sich gegenüber der Bedienpult 3 befindet, zu weit in Richtung des Bedienpults 3 geöffnet wird.

## Patentansprüche

1. Vorrichtung zum Einsatz an einer Werkzeugmaschine, umfassend:
- ein Bedienpult (3), über das die Werkzeugmaschine (2) durch einen Benutzer steuerbar ist, und
- einen das Bedienpult (3) haltenden Haltearm (4), der mittels eines Gelenks (44) derart an der Werkzeugmaschine (2) befestigbar ist, dass der das Bedienpult (3) haltende Haltearm (4) relativ zu der Werkzeugmaschine (2) um eine vertikale Achse (A1) des Gelenks (44) verschwenkbar ist,
wobei die Vorrichtung (1) mit wenigstens einem Dämpfungselement (51; 52) versehen ist, das einen Stoß der Vorrichtung (1) dämpft, der aufgrund einer Kollision zwischen der Vorrichtung (1) und der Werkzeugmaschine (2) auftritt, wenn der Haltearm (4) um die vertikale Achse (A1) zu der Werkzeugmaschine (2) hin verschwenkt wird.

2. Vorrichtung nach Anspruch 1, **dadurch gekennzeichnet, dass**
das Bedienpult (3) ein von dem Haltearm (4) gehaltenes Gelenkelement (9) aufweist, an dem eine Anzeigeeinheit (7) und eine Eingabeeinheit (8) des Bedienpults (3) gehalten sind,
wobei das Gelenkelement (9) sich entlang einer horizontalen Achse (A2) erstreckt und die Anzeigeeinheit (7) und/oder die Eingabeeinheit (8) um die horizontale Achse (A2) verschwenkbar ist.

3. Vorrichtung nach Anspruch 2, **dadurch gekennzeichnet, dass**
das zumindest eine Dämpfungselement (51; 52) von dem Bedienpult (3) weg in Richtung der horizontalen Achse (A2) über die Anzeigeeinheit (7) und/oder die Eingabeeinheit (8) hinausragt.

4. Vorrichtung nach Anspruch 2 oder 3, **dadurch gekennzeichnet, dass**
ein erster Endabschnitt (91) des Gelenkelements (9) an einem Verbindungselement (41) angebracht ist, das an einem Ende des Haltearms (4) vorgesehenen ist.

5. Vorrichtung nach Anspruch 4, **dadurch gekennzeichnet, dass**
ein erstes Dämpfungselement (51) an dem Verbindungselement (41) angebracht ist.

6. Vorrichtung nach Anspruch 5, **dadurch gekennzeichnet, dass**
die horizontalen Achse (A2) sich durch das erste Dämpfungselement (51) erstreckt.

7. Vorrichtung nach Anspruch 5 oder 6, **dadurch gekennzeichnet, dass**
das erste Dämpfungselement (51) von dem Bedienpult (3) weg in Richtung der horizontalen Achse (A2) über das Verbindungselement (41) hinausragt.

8. Vorrichtung nach einem der Ansprüche 4 bis 7, **dadurch gekennzeichnet, dass**
ein zweites Dämpfungselement (52) an einem dem ersten Endabschnitt (91) gegenüberliegenden zweiten Endabschnitt des Gelenkelements (9) angeordnet ist.

9. Vorrichtung nach Anspruch 8, **dadurch gekennzeichnet, dass**
das zweite Dämpfungselement (52) von dem Bedienpult (3) weg in Richtung der horizontalen Achse (A2) über die Anzeigeeinheit (7) und/oder die Eingabeeinheit (8) hinausragt.

10. Vorrichtung nach einem der Ansprüche 4 bis 9, **dadurch gekennzeichnet, dass**
der Haltearm (4) eine L-Form aufweist, wobei ein horizontaler Armabschnitt (42) des Haltearms (4) mittels des Gelenks (44) an der Werkzeugmaschine (2) anbringbar ist, und das Verbindungselement (41) an einem sich aufwärts erstreckenden Armabschnitt (43) des Haltearms (4) angebracht ist, wobei das Verbindungselement (41) um eine zweite vertikale Achse (A3) relativ zu dem sich aufwärts erstreckenden Armabschnitt (43) verschwenkbar ist.

11. Vorrichtung nach einem der vorstehenden Ansprüche, **dadurch gekennzeichnet, dass**
das zumindest eine Dämpfungselement (51; 52) ein Kunststoffmaterial umfasst, insbesondere ein elastisches Kunststoffmaterial.

12. Vorrichtung nach einem der vorstehenden Ansprüche, **dadurch gekennzeichnet, dass**
das zumindest eine Dämpfungselement (51; 52) lösbar an der Vorrichtung (1) angebracht ist.

13. Eine numerisch gesteuerte Werkzeugmaschine, umfassend:
- eine Vorrichtung nach einem der vorstehenden Ansprüche, und
- ein Gelenk (44),
wobei der Haltearm (4) das Bedienpult (3) hält und mittels des Gelenks (44) derart an der Werkzeugmaschine (2) befestigt ist, dass der das Bedienpult (3) haltende Haltearm (4) relativ zu der Werkzeugmaschine (2) um die vertikale Achse (A1) des Gelenks (44) verschwenkbar ist, und
die Vorrichtung (1) mit wenigstens einem Dämpfungselement (51; 52) versehen ist, das einen Stoß der Vorrichtung (1) dämpft, der aufgrund einer Kollision zwischen der Vorrichtung (1) und der Werkzeugmaschine (2) auftritt, wenn der Haltearm (4) um die vertikale Achse (A1) zu der Werkzeugmaschine (2) hin verschwenkt wird.
